# EUROPÄISCHE PATENTSCHRIFT

(11) **EP 1 249 621 B1**
(45) Veröffentlichungstag und Bekanntmachung des Hinweises auf die Patenterteilung: **03.01.2007**
(21) Anmeldenummer: 02005167.8
(22) Anmeldetag: 08.03.2002
(51) Int. Cl.: F16B 2/06

(54) **Klemmvorrichtung zum Klemmen von Trägern**
Device for clamping supports
Dispositif de montage par serrage de structures porteuses

(30) Priorität: 12.04.2001 DE 10118714; 09.08.2001 DE 10139226
(43) Veröffentlichungstag der Anmeldung: 16.10.2002
(73) Patentinhaber: LISEGA GMBH, 27404 Zeven (DE)
(72) Erfinder: Hardtke, Hans-Herlof, 27404 Zeven (DE); Bernert, Jörg, 27404 Zeven-Hofkoh (DE)
(74) Vertreter: Lippert, Stachow & Partner

(56) Entgegenhaltungen:
- DE-C- 530 053
- GB-A- 629 096
- GB-A- 658 500
- GB-A- 1 122 255
- US-A- 5 025 987
- US-A- 5 104 079

## Beschreibung

Die Erfindung betrifft eine Klemmvorrichtung zum lösbaren Verbinden von Bauteilen mit Trägern oder zum lösbaren Verbinden von Trägern.

Derartige Klemmvorrichtungen werden beispielsweise dort verwendet, wo ein Zusammenschweißen der Träger nicht möglich ist oder die Träger lösbar miteinander verbunden werden müssen, damit diese wiederverwendet werden können. Diese Träger können prinzipiell eine beliebige Form, beispielsweise einen U-förmgen, einen T- oder auch einen Doppel-T-förmigen Querschnitt aufweisen. Diese Profile weisen häufig Flansche mit angeschrägten Flächen, insbesondere an den Innenflächen, auf. Liegt die Klemmvorrichtung an angeschrägten Trägerflanschen oder angeschrägten Anlageflächen von Bauteilen mit Hilfe derer die Träger miteinander verbunden sind, an, können sich beim Aufbringen einer Klemmkraft oder Spannkraft die Klemmvorrichtung und der Trägers bzw. das Bauteils aufgrund der nicht parallelen gegenseitigen Anlageflächen zueinander verschieben.

Eine Lösung dieses Problems kann darin bestehen, dass das Spannelement der Klemmvorrichtung eine zur angeschrägten Fläche des Flansches bzw. des Bauteils gegensinnig verlaufende Schräge als Anlagefläche aufweist, um ein paralleles Anliegen der Anlagefläche des Spannelements an die Anlagefläche des Trägers bzw. des Bauteils sicherzustellen. Somit muss für jede spezielle Anlagefläche eine zugeordnete Klemmvorrichtung bereitgestellt werden.

Eine weitere Lösung nach dem Stand der Technik besteht darin, zwischen der angeschrägten Fläche des Trägers bzw. des Bauteils und der Anlagefläche des Spannelements ein zusätzliches Bauteil anzuordnen. Beispielsweise ist in der deutschen Offenlegungsschrift P 22 45 862 eine Klemmverbindung für Profilschienen mit Doppel-T- oder U-Profil mit unterschiedlicher Breite der Querstege offenbart, bei welcher zwischen die angeschrägte Innenfläche des Querstegs einer U-Schiene und einer Klemmplatte ein Anschlagklötzchen mit gegensinnig verlaufender Schräge eingefügt ist, um ein durch die Neigung des U-Schenkels ermöglichtes Verschieben der Klemmplatte auf dem U-Schenkel beim Festziehen der Klemmverbindung zu verhindern. Das Verwenden eines solchen Anschlagklötzchens zum Ausgleichen von nicht parallel zueinander verlaufenden Anlageflächen erfordert zumindest einen zusätzlichen Arbeitsschritt beim Anbringen derartiger Klemmvorrichtungen.

Das großbritannische Patent GB 658,500 betrifft eine Klemmvorrichtung zum lösbaren Verbinden von Bauteilen mit Trägern, mit einem Spannelement, auf das eine Kraft ausübbar ist, die über eine an dem Spannelement vorgesehene Anlagefläche auf das Bauteil übertragbar ist. Dabei ist die Anlagefläche eben gestaltet und weist eine Riffelung auf.

Somit liegt der Erfindung die Aufgabe zugrunde, eine Klemmvorrichtung bereitzustellen, welche die dargestellten Nachteile von herkömmlichen Klemmvorrichtungen zumindest teilweise behebt und insbesondere auch mit Bauteilen und Trägern unterschiedlicher Abmessungen bzw. Schrägen verwendbar ist.

Diese Aufgabe löst die Erfindung schon mit einer Klemmvorrichtung zum lösbaren Verbinden von Bauteilen mit Trägern oder von Trägern untereinander mit den Merkmalen des Anspruchs 1.

Danach umfasst eine erfindungsgemäße Klemmvorrichtung zum lösbaren Verbinden von Bauteilen mit Trägern oder zum lösbaren Verbinden von Trägern ein Spannelement auf, auf das eine Kraft ausübbar ist, die über eine an dem Spannelement vorgesehene Anlagefläche zylindrisch ist und auf das Bauteil oder den Träger übertragbar ist. Die Klemmvorrichtung zeichnet sich dadurch aus, dass die Anlagefläche durch ein mit dem Spannelement verbundenes, zylindrisches oder halbzylindrisches Gewindestück bereitgestellt ist.

Vorteilhafte Ausführungsformen der Erfindung sind in den Unteransprüchen angegeben.

Da die bekannten Klemmvorrichtungen auf glatten oder lackierten Trägern Verrutschen und keine ausreichende Fixierung der Träger gewährleisten, insbesondere bei stoßartiger Belastung, ist zumindest ein geringfügiger Formschluss zwischen dem Spannelement und den Trägern erforderlich ist. Dieser Formschluss wird durch das Gewinde des Gewindestückes hergestellt, das sich beim Anziehen des Spannelements in die Oberfläche der Träger einpresst.

Das Gewindestück besteht vorzugsweise aus einem härtbaren Material, insbesondere einem härtbar austenitischen Stahl, wie X46Cr13. Das Gewindestück weist üblicherweise ein Längen- / Durchmesserverhältnis von unter 10, vorzugsweise unter 5 auf.

Die Verbindung zwischen dem Wandelement und dem Gewindestück kann entweder beispielsweise durch eine Rastverbindung erfolgen, wobei vorzugsweise eine schalenförmige Ausnehmung mit einem Hinterschnitt an dem Spannelement vorgesehen ist, in die das Gewindestück einrastbar ist, oder durch einfaches Einkleben des Gewindestücks in die schalenförmige Ausnehmung des Spannelements erfolgen. Andere geeignete Verbindungsverfahren sind auch möglich.

Auch das vorliegende Spannelement ist vorzugsweise brückenförmig ausgebildet und das Gewindestück ist an einem ersten längsseitigen Ende des Spannelements angeordnet. In der zuvor beschriebenen Weise kann das Spannelement beispielsweise am ersten längsseitigen Ende an einem Trägerflansch und mit seinem zweiten längsseitigen Ende an das Bauteil angepresst werden, wodurch der Träger und das Bauteil miteinander verklemmbar sind.

Die Erfindung wird durch das Beschreiben einiger Ausführungsformen unter Bezugnahme auf die beiliegenden Zeichnungen erläutert, wobei
- Fig. 1: eine erste Klemmvorrichtung in einer Perspektivdarstellung,
- Fig. 2: die in Fig. 1 dargestellte Klemmvorrichtung in einer Seitendarstellung mit einem geklemmten Trägerflansch, welcher eine horizontal verlaufende Unterseite aufweist,
- Fig. 3: die in Fig. 1 dargestellte Klemmvorrichtung in einer Seitendarstellung mit einem geklemmten Trägerflansch, welcher eine schräg verlaufende Unterseite aufweist,
- Fig. 4a,: b ein Spannelement in zwei perspektivischen Ansichten,
- Fig. 5: ein zylinderförmiges Anlageelement,
- Fig. 6a, b: ein weiteres zylinderförmiges Anlageelement mit einer Nut in einer Seiten- und einer Querschnittsdarstellung,
- Fig. 7: eine mit dem in den Figuren 4a, b dargestellten Spannelement zusammenwirkende Klemmscheibe,
- Fig. 8: eine weitere Klemmvorrichtung in einer Perspektivansicht,
- Fig. 9: die in Fig. 8 dargestellte Klemmvorrichtung in einer Aufsichtdarstellung zeigt,
- Fig. 10a, 10b, 10c: eine Seitenansicht der erfindungsgemäßen Klemmvorrichtung in verschiedenen Winkelstellungen zur Befestigung unterschiedlich hoher Träger,
- Fig. 11: ein Längsschnitt durch die Klemmvorrichtung gemäß Fig. 10 und
- Fig. 12: ein Schnitt entlang der Linie XII - XII gemäß Fig. 11.

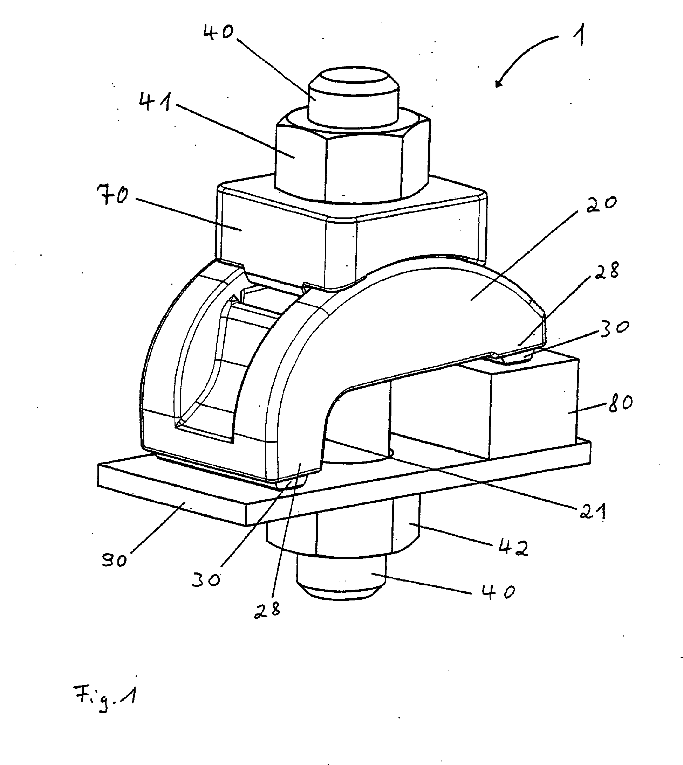

In Fig. 1 ist eine Klemmvorrichtung 1 dargestellt, mit welcher ein Träger 80 an ein Bauteil 90 geklemmt ist. Die Klemmvorrichtung besteht im Wesentlichen aus einem brückenförmig ausgebildeten Spannelement 20, an dessen beiden längsseitigen Enden jeweils ein Anlageelement 30 angebracht ist, das an dem Träger 80 bzw. dem Bauteil 90 anliegt. Ein seitliches Herausschieben der Anlageelemente 30 aus dem Spannelement verhindern Seitenwandabschnite 28 am Spannelement. Um die unterschiedliche Höhe der Anlage am Bauteil bzw. am Träger im Wesentlichen zu kompensieren, weist das Spannelement an der Seite, an welcher das Anlageelement 30 am Bauteil 90 anliegt, einen zur Längserstreckung des Spannelements senkrecht verlaufenden Fußabschnitt 21 auf. Da die relative Anordnung der Anlageelemente 30 zum Spannelement 20 nicht fest ist, muss die Höhe des Fußes des Spannelements nicht genau gleich der Höhe des Trägers 80 entsprechen, um eine plane Auflage des Anlageelements 30 am Träger 80 zu gewährleisten, wobei bezüglich der Einzelheiten auf die untenstehenden Erläuterungen verwiesen wird. Zum Ausüben einer Spannkraft erstreckt sich ein Bolzen 40 etwa in der Mitte des Spannelements im Wesentlichen senkrecht zu dessen Längserstreckung durch dieses und das Bauteil 90 hindurch, wobei auf der Unterseite des Bauteils eine Mutter 42 auf den Bolzen 40 aufgedreht ist, die als untere Klemmplatte dient. Auf das obere Ende des Bolzens 40 ist eine Klemmplatte 70 aufgesteckt, die mittels einer weiteren Mutter 41 zum Aufbringen einer Spannkraft auf das Spannelement gegen die Klemmplatte 70 drückt, welche die Kraft auf das Spannelement 20 überträgt, das das jeweilige Anlageelement gegen das Bauteil 90 bzw. den Träger 80 drückt, wodurch letztlich der Träger 80 und das Bauteil 90 zueinander fixiert sind.

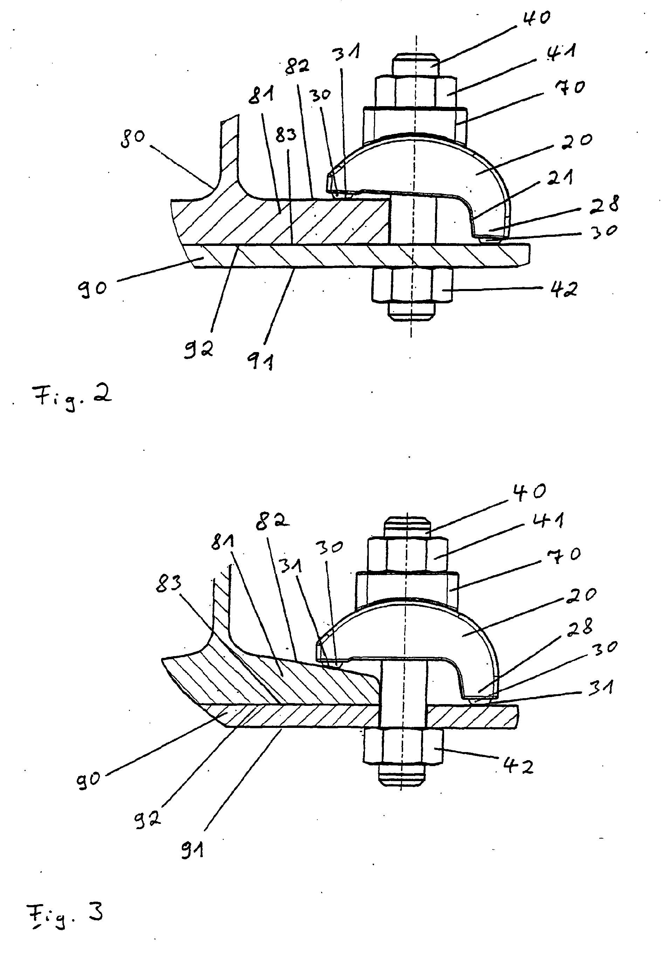

In Fig. 2 ist eine Klemmvorrichtung zur Klemmung eines Trägerflansches 81 an ein Bauteil 90 in einer Seitenansicht gezeigt, wobei die Unterseite 82 parallel zur Oberseite 83 des Trägerflansches verläuft, die an der Oberseite 92 des Bauteils 90 flächig anliegt. Das Anlageelement 30, welches direkt auf der Oberseite 92 des Bauteils 90 anliegt, ist relativ zum Spannelement 20 leicht in der Lagerschale verdreht orientiert zum Anlageelement 30, welches an der Unterseite 82 des Trägerflansches anliegt, da der Brückenfuß 21 die Höhe des Trägerflansches nicht vollständig ausgleicht.

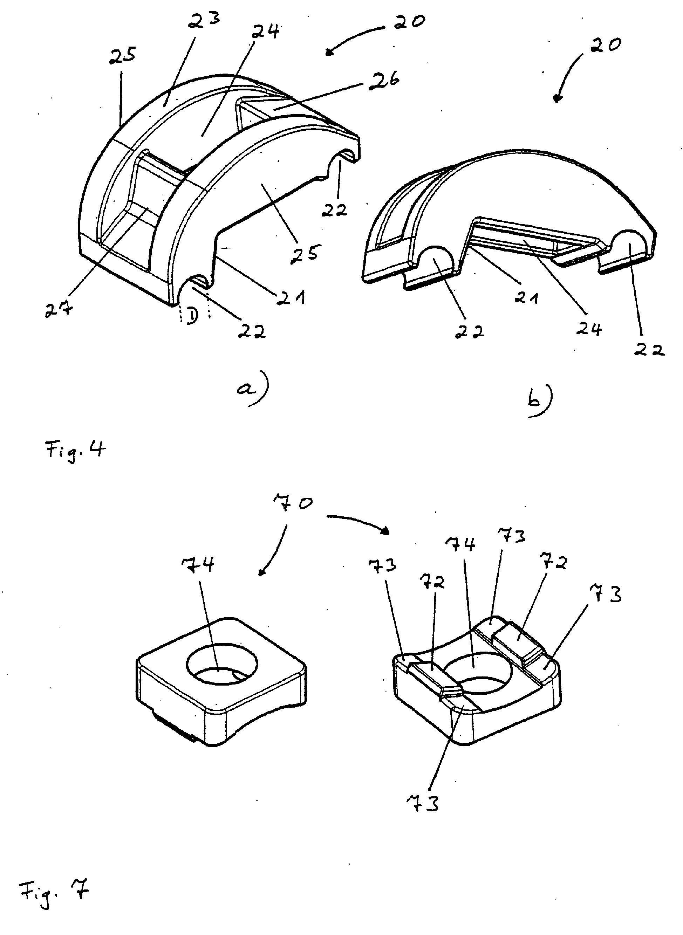

Demgegenüber weist der in Fig. 3 in einer Seitenansicht dargestellte Trägerflansch 81 eine zur Oberseite 83 nicht parallel verlaufende Unterseite 82 auf. Das Klemmelement 1 ist identisch zu dem in Fig. 2 gezeigten. Die in Fig. 3 dargestellten Anlageelemente 30 sind relativ zum Spannelement 20 stark unterschiedlich orientiert, da sich das in der Zeichnung auf der linken Seite angeordnete Anlageelement 30 bei der Montage des Klemmelements 1 innerhalb der Lagerschale des Spannelements 20 soweit gedreht hat, bis das Anlageelement 30 mit seiner Anlagefläche 31 vollständig auf der Unterseite 82 des Trägerflansches 81 aufliegt. Durch die flächige Anlage des Anlageelements 30 an die schräg verlaufende Unterseite des Trägerflansches wird erreicht, dass beim Anziehen der Schraube 41 bzw. 42 keine Kraftkomponente senkrecht zur Achse des Bolzens 40 entsteht, aufgrund dessen sich der Trägerflansch relativ zur Klemmvorrichtung verschieben könnte. Da der Brückenfuß des Spannelements in Fig. 3 gerade den Höhenunterschied zwischen Bauteil 90 und Trägerflansch ausgleicht, ist das rechte Anlageelement in seiner zugeordneten Lagerschale nicht verdreht. Auch die in den Fign. 2 und 3 dargestellten Spannelemente weisen beide Seitenwandabschnitte 28 in der Lagerschale auf, welche auf die Anlageelemente wirkende Querkräfte aufnehmen.

Der Aufbau eines beispielhaften Spannelements 20 ist in den Fign. 4a und 4b dargestellt. Zwei brückenförmige Seitenteile 25 sind im Bereich der Brückenköpfe mittels Querstegen 26, 27 miteinander verbunden, wodurch ein Bolzendurchgang 24 gebildet ist, der von Innenflächen der zwei Seitenteile und der Querstege begrenzt ist. Die Seitenteile weisen auf ihrer Oberseite jeweils eine gekrümmte Gleitfläche 23 auf, auf welchen die untenstehend näher erläuterte Klemmplatte aufgelegt wird. Einer der Brückenköpfe weist zum Ausgleich der Dicke des am anderen Brückenkopf gehaltenen Trägerflansches einen Fußabschnitt 21 auf. An beiden Brückenköpfen ist jeweils in Querrichtung eine seitlich offene Lagerschale 22 ausgebildet. Wie obenstehend erläutert, können diese seitlichen Öffnungen auch durch einen Seitenabschnitt 28 der Lagerschale geschlossen sein. Die Lagerschalenoberfläche ist zylinderförmig, wobei die Breite der Lagerschalenöffnung D kleiner als 2 R ist, wobei R der Radius der Zylinderschale ist. Dies bedeutet, dass die Lagerschale eine Hinterschneidung aufweist, die verhindert, dass ein entsprechend der Lagerschale geformter zylinderförmiger Lagerkörper nach unten aus der Lagerschale herausfällt.

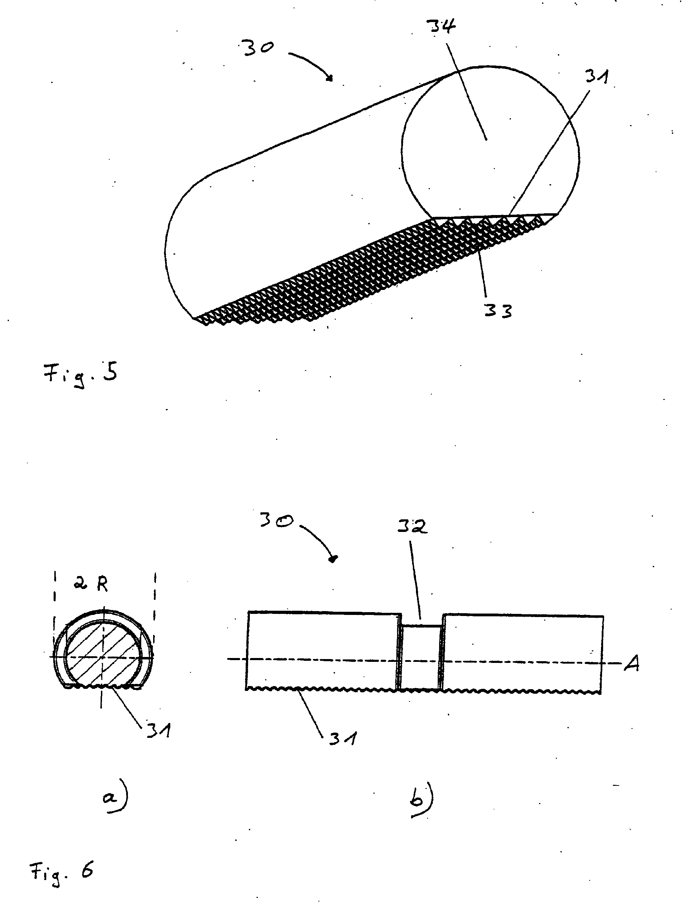

In Fig. 5 ist ein als zylinderförmiger Lagerkörper ausgebildetes Anlageelement 30 in einer Perspektivansicht dargestellt. Der Zylinder weist einen Radius entsprechend der Lagerschale R auf. Zur Formung der Anlagefläche 31 weist der Zylinder eine Schnittebene auf, die parallel zur Zylinderachse verläuft. Der Lagerkörper ist für das in den Fign. 1, 2 und 3 dargestellte Spannelement gestaltet. Dabei wirkt die Seitenfläche 34 mit einem zugeordneten Seitenabschnitt 28 der Lagerschale zusammen, um axiale Kräfte auf das Anlageelement 30 aufzunehmen. Auf die Schnittfläche ist eine Riffelung aufgebracht, deren Vorsprünge 33 sich beim Aufbringen der Spannkraft in die Gegenfläche des zu haltenden Gegenstands einprägen.
In Fig. 6 ist ein zylinderförmiger Lagerkörper ausgebildetes Anlageelements 30 in einer Seiten- und einer Querschnittsansicht dargestellt, das zum Verwenden mit einem in den Fign. 4a, 4b dargestellten Spannelement ausgebildet ist. Der Zylinder weist wieder einen Radius entsprechend der Lagerschale R auf. Die Schnittebene zur Bildung einer Anlagefläche 31 verläuft parallel zur Zylinderachse A. Das Anlageelement 30 weist ferner etwa in der Mitte seiner Längserstreckung eine umfänglich verlaufende Nut 32 auf, die mit einer in den Fign. 4a, 4b nicht dargestellten Nase in der Lagerschale zusammenwirkt. Dabei greift die Nase in die Nut 32 ein, wodurch eventuell auftretende Kräfte in Längsrichtung des Anlageelements aufgefangen werden können und somit ein seitliches Heraustreten des Anlageelements 30 aus der Lagerschale 22 verhindert werden kann. Demnach können Seitenwandabschnitte 28 am Spannelement entfallen.

Aufgrund der obenstehend erläuterten Hinterschneidung der Lagerschale 22, die jedoch sehr gering ist, kann das in Fig. 5b dargestellte Halteelement mittels einem leichten Druck in die Lagerschale 22 eingeklippt werden, sodass diese unverlierbar mit dem Spannelement verbunden ist.

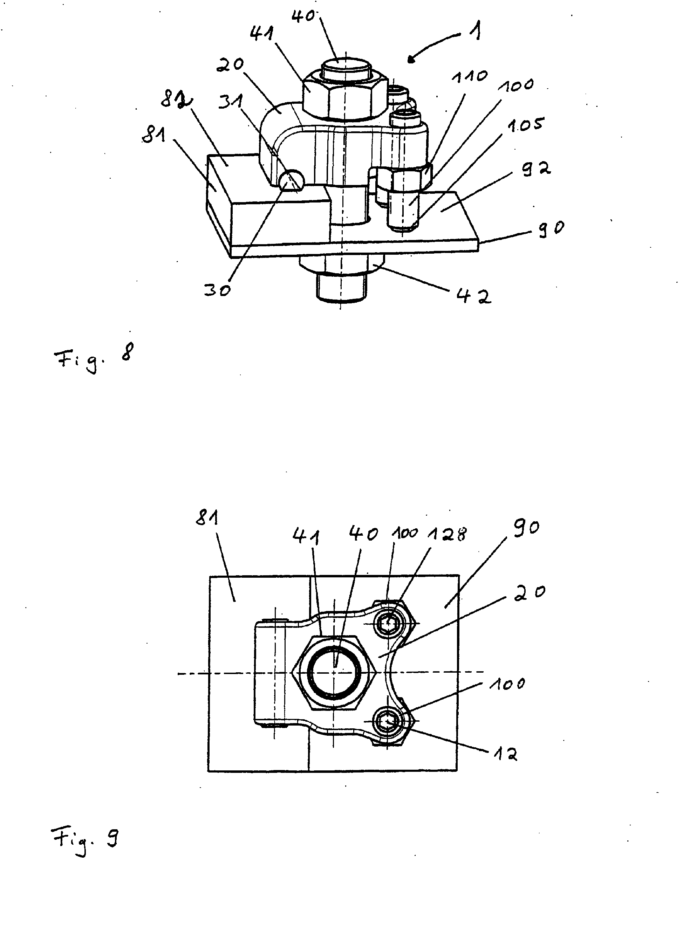

Eine mit dem Spannelement und der Spannmutter zusammenwirkende Klemmplatte 70 ist im Detail in den Fign. 7a, b dargestellt. Sie weist entsprechend den gekrümmten Oberflächen 23 des Spannelements zugeordnet gekrümmte Gleitflächen 73 auf. Der Bolzen 40 des zusammengebauten Klemmelements erstreckt sich durch die Bolzendurchführung 74. Führungsstege 72 an der Klemmplatte verhindern die seitliche Verschiebung des Bolzens zum Spannelement. Hierzu wirken die Führungsstege mit den Innenflächen der Seitenelemente 25 zusammen, siehe Fig. 1. Durch die Gleitflächen 23, 73 wird sichergestellt, dass die Klemmscheibe flächig auf dem Spannelement aufliegt, auch wenn sich das Spannelement aufgrund der Drehung eines Anlageelements in seiner Lagerschale beim Anziehen der Spannmutter 41 etwas zu einer Seite neigt.

Trotz eines möglichen Formschlusses zwischen dem Spannelement 20 und dem Anlageelement 30 ist das Anlageelement unabhängig von der spezifischen Ausbildung von Spannelement und Anlageelement in der Lagerschale 22 drehbar gehalten. Dies ist von entscheidender Bedeutung für die Funktionsweise der Klemmvorrichtung, auf die im Folgenden mit Bezug auf Fig. 3 eingegangen wird. Dabei sei angenommen, dass vor dem Zusammenbau des Klemmelements die beiden Anlageflächen 31 der Anlagelemente 30 im Spannelement 20 parallel zueinander orientiert sind, wobei diese Orientierung der Oberseite 92 des Bauteils 90 entsprechen soll. Wird nun der Trägerflansch 81 zum Bauteil 90, wie in Fig. 3 dargestellt, angeordnet und der Gewindebolzen 40 mit der unteren Mutter 42 durch die Öffnung in der Platte 90 hindurchgeführt, kann das Spannelement 20 mit dem rechten Anlageelement 30 auf die Platte 90 aufgelegt und das linke Anlageelement 30 auf die schräge Unterseite 82 des Trägerflansches 81 aufgesetzt werden. Die Anlagefläche 31 des linken Anlageelements 30 liegt jedoch nicht plan auf der Unterseite 82 des Trägerflansches auf, sondern ist zu dieser verkippt. Wird nun die Klemmplatte 70 auf das Spannelement 20 aufgelegt und die Mutter 41 auf den Bolzen 40 aufgedreht, resultiert ein Drehmoment, welches das linke Anlageelement 30 im Uhrzeigersinn dreht, bis die Anlagefläche 31 des Anlageelements parallel zur Unterseite 82 des Trägerflansches liegt. Eine nachfolgende Erhöhung der Spannkraft durch Drehen der Mutter 41 resultiert zu einer optimalen Klemmung des Trägerflansches 82 an das Bauteil 90.

In Fig. 8 ist in einer Perspektivzeichnung eine weitere Klemmvorrichtung dargestellt. Auch hier verläuft ein Bolzen 40 durch das Spannelement 20 und das Bauteil 90 hindurch, wobei die Mutter 42 als untere Klemmplatte dient. Der Bolzendurchgang im Spannelement entspricht etwa dem Durchmesser des Bolzens, sodass auf die Verwendung einer oberen Klemmplatte verzichtet werden kann. Im Gegensatz zur vorherigen Klemmvorrichtung liegt das Spannelement nicht mittels eines in einer Lagerschale angeordneten Anlageelements an dem Bauteil 90 an. Stattdessen sind zwei beabstandete Gewindebolzen 100 angeordnet, die jeweils in ein zugeordnetes Gewinde im Spannelement eindrehbar sind und sich im Wesentlichen parallel zum Spanngewindebolzen 40 bis auf die Oberseite 92 des Bauteils 90 erstrecken. Die dem Bauteil 90 zugewandten Endflächen 105 der Bolzen 100 ersetzen demnach die Anlagefläche 31 des rechten, z.B. in Fig. 2 dargestellten Anlageelements. Von der Oberseite, siehe Fig. 9, ist ein Werkzeug in eine Sechskant-Ausnehmung 128 einführbar, mit welchem die Gewindebolzen 100 weiter in das Spannelement 20 hinein oder im anderen Fall herausgedreht werden können, wodurch der Abstand des Spannelements 20 zum Bauteil 90 eingestellt werden kann. Mit den Muttern 110, die gegen die Unterseite des Spannelements gedreht werden können, wird der eingestellte Abstand zwischen dem Spannelement 20 und dem Bauteil 90 fixiert. Da sich die Orientierung der Anlagefläche 31 des Anlageelements 30 an die Unterseite 82 des Trägerflansches automatisch anpasst, muss die Einstellung der Bolzen 100 zur Festlegung des Abstands des Spannelements 20 zum Bauteil 90 nicht genau durchgeführt werden. Das Anlageelement 30 ist relativ zu den Gewindebolzen 100 so angeordnet, dass dessen Längserstreckung im Wesentlichen parallel zu einer gedachten Verbindungslinie zwischen den Bolzen 100 liegt, wobei zwischen der Verbindungslinie und dem Anlageelement 30 die Durchführung im Spannelement für den Gewindebolzen 40 gebildet ist.

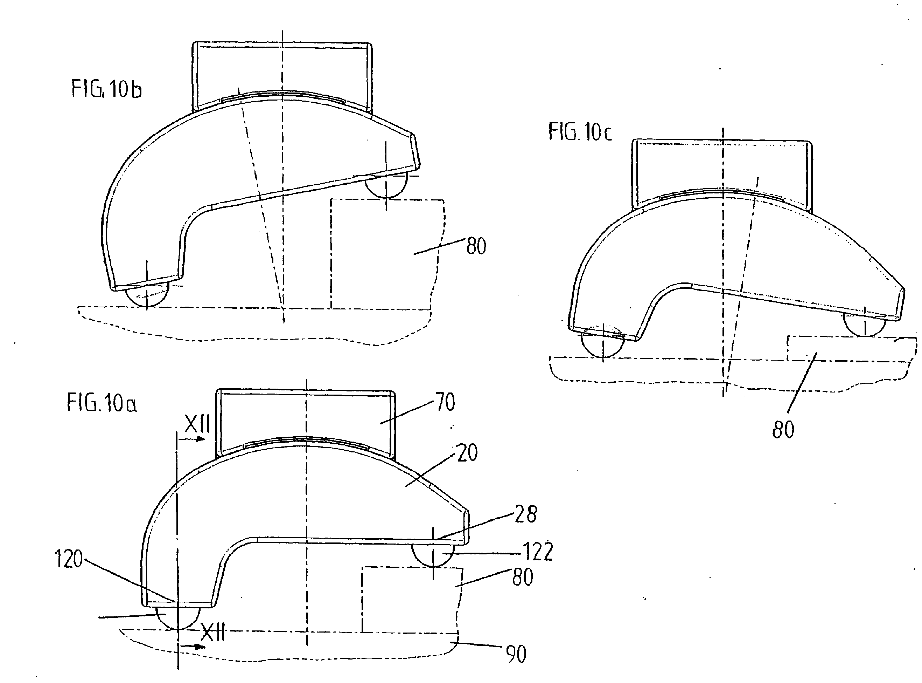

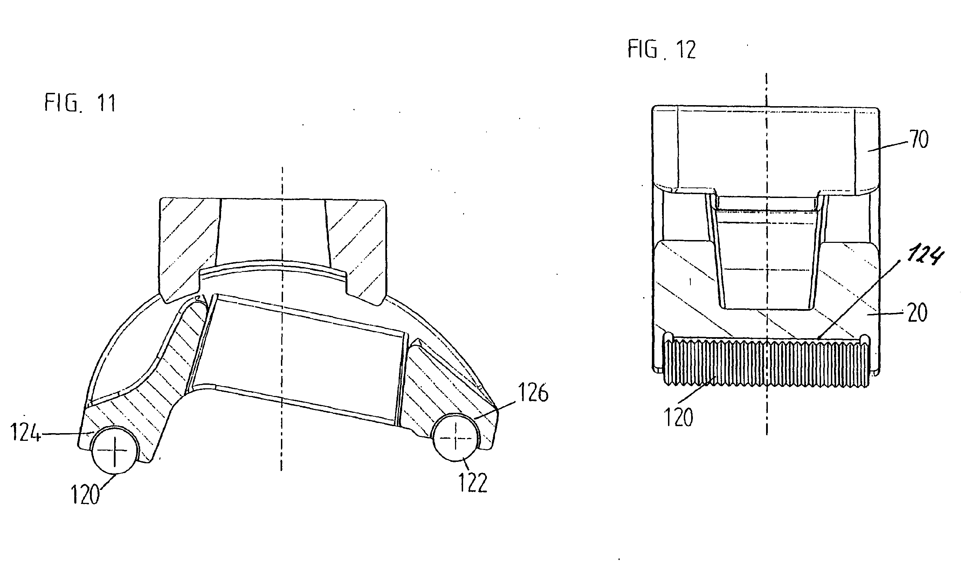

Die Fig. 10 - 12 zeigen die erfindungsgemäße Klemmvorrichtung, die ebenfalls nach dem Kugel-/Pfanneprinzip zur Justierung der relativen Lage des Spannelements arbeitet. Übereinstimmende Bauteile sind mit den gleichen Bezugszeichen versehen.

Demnach besteht diese Klemmvorrichtung ebenfalls aus einem Spannelement 20, das durch eine Klemmplatte 70 an einen Träger, ein Bauteil 90 oder dergleichen anpressbar ist. Ein nicht näher dargestellter Bolzen 40 erzeugt die Klemmkraft. Im Gegensatz zu den zuvorgehenden Ausführungsformen sind jedoch anstelle der drehbar in dem Spannelement 20 aufgenommenen Anlageelemente nunmehr einfach zylindrische Gewindestücke 120, 122 in halbschalenförmigen Ausnehmungen 124, 126 des Spannelement 20 eingesetzt. Die halbschalenförmigen Ausnehmungen 124, 126 erstrecken sich im Wesentlichen senkrecht zur Längserstreckungsrichtung des Spannelements 20 und sind an den längsseitigen Enden zum einen in dem Fußabschnitt 21 und zum andern in dem Seitenwandabschnitt 28 vorgesehen.

Die Gewindestücke 120, 122 sind in der vorliegenden Ausführungsform in die Ausnehmungen 124, 126 eingeklebt. Da der aus dem Spannelement 20 herausragende Bereich der Gewindestücke 120, 122 die Gestalt eines Halbzylinders aufweist, müssen die Gewindestücke nicht drehbar in dem Spannelement 20 aufgenommen sein wie die Anlageelemente bei den zuvor beschriebenen Ausführungsformen. Gleichwohl lassen sich über die sphärischen Flächen der Gewindestücke 120, 122 die gewünschten Winkelstellungen des Spannelements 20 im Verhältnis zu der Klemmplatte 70 einstellen. Damit ist die erforderliche Kompensation unterschiedlich hoher Anlagen am Bauteil 80 oder Träger 90 realisierbar (siehe Fig. 10a - 10c).

Der zu Fixierung erforderliche Formschluss wird durch das Gewinde der Gewindestücke 120, 122 hergestellt, das sich aufgrund des Anpressdrucks in die Oberflächen des Bauteils 80 oder des Trägers 90 einpressen. Zur Herstellung des Formschlusses kommt es wesentlich auf die strukturierte Oberfläche an. Demnach muss es sich nicht notwendigerweise um ein Gewindestück handeln, sondern es sind auch andere Geometrien zur Realisierung der Winkelverstellung mit einer entsprechenden Oberflächenstruktur verwendbar. Es ist zudem möglich, die vorzugsweise halbzylindrischen Anlageflächen an dem Spannelement 20 anzuformen, die mit eine geeigneten Oberflächenstrüktur zur Herstellung des Formschlusses versehen sind. Ein Gewindestück stellt jedoch eine wirtschaftlich besonders interessante Ausführungsformbereit, da nicht das ganz Spannelement 20 gehärtet werden muss und je nach Anwendungsfall beliebige Gewindestücke einsetzbar sind.

### Bezugzeichenliste

- 1: Klemmvorrichtung
- 20: Spannelement
- 21: Fußabschnitt
- 22: Lagerschale
- 23: Gleitfläche
- 24: Bolzendurchgang
- 25: Seitenelement
- 26, 27: Quersteg
- 28: Seitenwandabschnitt
- 30: Anlageelement
- 31: Anlagefläche
- 32: Nut
- 33: Vorsprung
- 34: Seitenfläche
- 40: Bolzen
- 41, 42: Mutter
- 70: Klemmplatte
- 72: Führungssteg
- 73: Gleitfläche
- 74: Bolzendurchführung
- 80: Träger
- 81: Trägerflansch
- 82: Unterseite des Trägerflansches
- 83: Oberseite des Trägerflansches
- 90: Bauteil
- 91: Unterseite des Bauteils
- 92: Oberseite des Bauteils
- 100: Bolzen
- 105: Bolzenendfläche
- 110: Mutter
- 120: Gewindestück
- 122: Gewindestück
- 124: Ausnehmung
- 126: Ausnehmung
- 128: Sechskant-Ausnehmung
- R: Radius
- D: Lagerschalenöffnung
- A: Zylinderachse

## Patentansprüche

1. Klemmvorrichtung zum lösbaren Verbinden von Bauteilen mit Trägern oder zum lösbaren Verbinden von Trägern, mit einem Spannelement (20), auf das eine Kraft ausübbar ist, die über eine an dem Spannelement (20) vorgesehene Anlagefläche auf das Bauteil oder den Träger übertragbar ist, **dadurch gekennzeichnet, dass** die Anlagefläche zylindrisch ist und durch ein mit dem Spannelement (20) verbundenes, zylindrisches oder halbzylindrisches Gewindestück (120,122) bereitgestellt ist.

2. Klemmvorrichtung nach Anspruch 1, **dadurch gekennzeichnet, dass** das Spannelement (20) brückenförmig ausgebildet ist und dass das Gewindestück (120,122) an einem ersten längsseitigen Ende des Spannelements angeordnet ist.

3. Klemmvorrichtung nach Anspruch 2, **dadurch gekennzeichnet, dass** benachbart zu beiden längsseitigen Enden des Spannelements (20) ein Gewindestück (120,122) zum Anlegen an jeweils einen Träger (80) oder ein Bauteil (90) angeordnet ist.

4. Klemmvorrichtung nach einem der Ansprüche 1 bis 3, **gekennzeichnet durch** eine im Wesentlichen halbschalenförmige Ausnehmung mit einer Hinterschneidung, in welche das Gewindestück mit seiner Mantelfläche einsetzbar ist.

5. Klemmvorrichtung nach einem der Ansprüche 1 bis 4, **gekennzeichnet durch** einen Seitenwandabschnitt der Lagerschale, welcher mit einem zugeordneten Wandabschnitt an einer Stirnseite des Gewindestücks zur Aufnahme von axialen Kräften auf den Lagerkörper zusammenwirkt.

6. Klemmvorrichtung nach einem der Ansprüche 1 bis 5, **gekennzeichnet durch** eine Spannschraube, welche sich **durch** das Spannelement zwischen dessen längsseitigen Enden hindurch erstreckt und auf die Oberseite des Spannelements eine Kraft ausübt.

7. Klemmvorrichtung nach Anspruch 6, **gekennzeichnet durch** zumindest einen Gewindebolzen (100), welcher in ein zugeordnetes Gewinde am Spannelement (20) eindrehbar ist und im Wesentlichen parallel zur Spannschraube verläuft, wobei die Anlagefläche eine Endfläche (105) des Gewindebolzens ist.

8. Klemmvorrichtung nach Anspruch 6 oder 7, **dadurch gekennzeichnet, dass** das Spannelement (20) durch zwei miteinander an ihren Längsenden verbundene und zueinander parallel angeordnete Seitenelemente (25) gebildet ist, die an der Oberseite gekrümmt sind, wobei zwischen den Längsenden ein Durchgang (24) für die Spannschraube (40) gebildet ist.

9. Klemmvorrichtung nach Anspruch 8, **gekennzeichnet durch** eine Klemmplatte (70), **durch** die sich die Spannschraube (40) erstreckt, und die zur Auflage auf der Oberseite der beiden Seitenelemente gekrümmt geformt ist, wobei die Spannschraube mittels einer Mutter (41) eine Kraft auf die Klemmplatte (70) ausübt.

10. Klemmvorrichtung nach einem der Ansprüche 1 bis 9, **dadurch gekennzeichnet, dass** das Gewindestück im Wesentlichen senkrecht zur Längserstreckung des Spannelementes verläuft.

11. Klemmvorrichtung nach einem der Ansprüche 1 bis 10, **dadurch gekennzeichnet, dass** das Gewindestück (120, 122) in das Spannelement (20) eingeklebt ist.

## Claims

1. Clamping device for detachable connection of components to supports, or for detachable connection of supports, with a clamping element (20), on which a force can be exerted that can be transmitted to the component or the support via a contact surface provided on the clamping element (20), **characterised in that** the contact surface is cylindrical and provided by a cylindrical or semi-cylindrical threaded piece (120, 122) connected to the clamping element (20).

2. Clamping device according to Claim 1, **characterised in that** the clamping element (20) is of bridge-shaped design and **in that** the threaded piece (120, 122) is located on a first longitudinal end of the clamping element.

3. Clamping device according to Claim 2, **characterised in that** a threaded piece (120, 122) is provided adjacent to both longitudinal ends of the clamping element (20) for positioning against a support (80) or a component (90).

4. Clamping device according to one of Claims 1 to 3, **characterised by** an essentially shell-shaped recess with an undercut, into which the threaded piece can be inserted with its lateral surface.

5. Clamping device according to one of Claims 1 to 4, **characterised by** a side wall section of the bearing shell, which interacts with an associated wall section on a face end of the threaded piece to absorb axial forces acting on the bearing body.

6. Clamping device according to one of Claims 1 to 5,
**characterised by** a tensioning bolt, which extends through the clamping element between its longitudinal ends and exerts a force on the upper side of the clamping element.

7. Clamping device according to Claim 6, **characterised by** at least one threaded bolt (100), which can be screwed into an associated thread on the clamping element (20) and runs essentially parallel to the tensioning bolt, where the contact surface is an end face (105) of the threaded bolt.

8. Clamping device according to Claim 6 or 7, **characterised in that** the clamping element (20) is formed by two side elements (25), which are connected to each other at their longitudinal ends and arranged parallel to each other, and the upper side of which is curved, a passage (24) for the tensioning bolt (40) being formed between the longitudinal ends.

9. Clamping device according to Claim 8, **characterised by** a clamping plate (70), through which the tensioning bolt (40) extends, and which is of curved shape for contacting the upper side of the two side elements, where the tensioning bolt exerts a force on the clamping plate (70) by means of a nut (41).

10. Clamping device according to one of Claims 1 to 9, **characterised in that** the threaded piece runs essentially perpendicularly to the longitudinal extension of the clamping element.

11. Clamping device according to one of Claims 1 to 10, **characterised in that** the threaded piece (120, 122) is cemented in place in the clamping element (20).

## Revendications

1. Dispositif de montage par serrage pour l'assemblage amovible de composants avec des supports ou pour l'assemblage amovible de supports avec un élément de serrage (20) sur lequel une force qui peut être transmise par le biais d'une surface de contact prévue au niveau de l'élément de serrage (20) sur le composant ou le support, peut être exercée, **caractérisé en ce que** la surface de contact est cylindrique et est mise à disposition par une pièce filetée (120, 122), semi cylindrique ou cylindrique, reliée à l'élément de serrage (20).

2. Dispositif de montage par serrage selon la revendication 1, **caractérisé en ce que** l'élément de serrage (20) est réalisé en forme de pont et **en ce que** la pièce filetée (120, 122), est disposée au niveau d'une première extrémité longitudinale de l'élément de serrage.

3. Dispositif de montage par serrage selon la revendication 2, **caractérisé en ce qu'**une pièce filetée (120, 122) est disposée adjacente aux deux extrémités longitudinales de l'élément de serrage (20) pour application contre un support (80) ou un composant (90).

4. Dispositif de montage par serrage selon l'une quelconque des revendications 1 à 3, **caractérisé par** un évidement essentiellement en forme de demi-coque avec une contre-dépouille dans laquelle la pièce filetée peut être placée avec sa surface d'enveloppe.

5. Dispositif de montage par serrage selon l'une quelconque des revendications 1 à 4, **caractérisé par** une section de paroi latérale de la coquille de palier laquelle concoure avec une section de paroi associée, au niveau d'un côté frontal de la pièce filetée, pour réception des forces axiales sur le corps de palier.

6. Dispositif de montage par serrage selon l'une quelconque des revendications 1 à 5, **caractérisé par** une vis de serrage laquelle s'étend à travers l'élément de serrage entre ses extrémités longitudinales et exerce une force sur le côté supérieur de l'élément de serrage.

7. Dispositif de montage par serrage selon la revendication 6, **caractérisé par** au moins un boulon fileté (100) lequel peut être tourné dans un filetage associé, au niveau de l'élément de serrage (20), et est essentiellement parallèle à la vis de serrage, sachant que la surface de contact est une surface terminale (105) du boulon fileté.

8. Dispositif de montage par serrage selon la revendication 6 ou 7, **caractérisé en ce que** l'élément de serrage (20) est formé par deux éléments latéraux (25), disposés parallèlement l'un à l'autre, reliés ensemble au niveau de leur extrémité longitudinale et courbés au niveau du côté supérieur, sachant qu'un passage (24) pour la vis de serrage (40) est formé entre les extrémités longitudinales.

9. Dispositif de montage par serrage selon la revendication 8, **caractérisé par** une plaque de serrage (70) à travers laquelle s'étend la vis de serrage (40) et qui est formée courbée pour appui sur le côté supérieur des deux éléments latéraux, sachant que la vis de serrage exerce une force sur la plaque de serrage (70) au moyen d'un écrou (41).

10. Dispositif de montage par serrage selon l'une quelconque des revendications 1 à 9, **caractérisé en ce que** la pièce filetée est essentiellement perpendiculaire à l'extension longitudinale de l'élément de serrage.

11. Dispositif de montage par serrage selon l'une quelconque des revendications 1 à 10, **caractérisé en ce que** la pièce filetée (120, 122) est collée dans l'élément de serrage (20).
